# EUROPEAN PATENT APPLICATION

(11) **EP 4 304 026 A1**
(43) Date of publication of application: **10.01.2024**
(21) Application number: 22183781.8
(22) Date of filing: 08.07.2022
(51) Int. Cl.: H02G 1/10, H02G 9/12, H02G 15/06, H02G 9/06, F16L 1/12, H01R 4/22, H01R 9/03, H01R 13/523, H01R 13/53, H01R 31/02

(54) **OFFSHORE SYSTEM COMPRISING A DYNAMIC SUBMARINE POWER CABLE**

(71) Applicant: NKT HV Cables AB, 371 60 Lyckeby (SE)
(72) Inventor: ERIKSSON, Erik, Växjö (SE); THYRVIN, Ola, Karlskrona (SE); TYRBERG, Andreas, Lyckeby (SE); JOHNSSON, Joel, Kalmar (SE)
(74) Representative: Kransell & Wennborg KB

(57) **Abstract**

An offshore system (1) comprising: a dynamic submarine power cable (11), a bend stiffener (9) having a lower end (9b) and a top end (9a), the bend stiffener (9) having a central channel extending from the lower end (9b) to the top end (9a), the central channel receiving the dynamic submarine power cable (11) with a radial spacing between an inner surface of the central channel and an outer surface of the dynamic submarine power cable (11) along the length of the dynamic submarine power cable (11) arranged in the bend stiffener (9), the radial spacing forming a longitudinal channel between the bend stiffener (9) and the dynamic submarine power cable (11), and a fluid flow device (13) configured to generate a fluid flow inside the longitudinal channel.

## Description

### TECHNICAL FIELD

The present disclosure generally relates to offshore systems comprising a dynamic submarine power cable.

### BACKGROUND

Power generating floating offshore structures such as floating wind turbines are connected to a dynamic submarine power cable to deliver power generated by the floating wind turbine to an electrical grid. Other types of floating offshore structures such as floating oil platforms may be connected to a dynamic submarine power cable for power consumption purposes.

Floating offshore structures are subjected to wave movement. Dynamic submarine power cables are therefore connected to the floating offshore structures via a bend stiffener to control the bending radius and reduce the fatigue loads of the cable.

### SUMMARY

Power cables are designed to be able to be operated at a maximum operating temperature, which for example may be 90°C according to international standards such as IEC 60287-1-1.

It has been found that the bend stiffener forms a cable hot spot along the cable route between the seabed and the floating offshore structure because of its low thermal conductivity. This hot spot is the hottest region of the dynamic submarine power cable. The maximum current allowed in the dynamic submarine power cable is thus determined by the temperature in the power cable as it extends through the bend stiffener.

A general object of the present disclosure is to provide an offshore system which solves or at least mitigates problems of the prior art.

There is hence provided an offshore system comprising: a dynamic submarine power cable, a bend stiffener having a lower end and a top end, the bend stiffener having a central channel extending from the lower end to the top end, the central channel receiving the dynamic submarine power cable with a radial spacing between an inner surface of the central channel and an outer surface of the dynamic submarine power cable along the length of the dynamic submarine power cable arranged in the bend stiffener, the radial spacing forming a longitudinal channel between the bend stiffener and the dynamic submarine power cable, and a fluid flow device configured to generate a fluid flow inside the longitudinal channel.

Thus, the hot spot region of the dynamic submarine power cable is cooled by forced cooling by means of the fluid flow device. As a result, a higher current can be fed through the dynamic submarine power cable and/or the cross-section of the conductor(s) of the dynamic submarine power cable may be reduced during the design stage as a result of the cooler dynamic submarine power cable in the bend stiffener.

The applicant has as an example analysed the improvement given by forced cooling for a 3^{∗}1000 mm² 230 kV nominal voltage AC dynamic submarine power cable with an allowed maximum conductor temperature of 90°C. In a simulation, a current of 1050 A was fed through the dynamic submarine power cable. This resulted in a maximum conductor temperature of the cable inside the bend stiffener of about 140°C when no cooling was provided. When forced air cooling with a speed of 1 m/s via the bend stiffener was included in the simulation, with an assumed ambient temperature of 30°C, the maximum conductor temperature at most reached about 90°C.

According to one embodiment the fluid flow device is configured to generate the fluid flow in a direction from the top end towards the lower end.

Bend stiffeners taper in a direction from the top end towards the lower end. A bend stiffener thus has its thickest radial dimension in the upper half, closer to the top end than to the lower end. Therefore, a non-cooled dynamic submarine power cable reaches its hottest point in the upper half of the bend stiffener. By generating a fluid flow in a direction from the top end towards the lower end, the fluid flowing past the hottest point is cooler than if e.g., the fluid flow would be provided in a direction from the lower end towards the top end, e.g., because the fluid travels a shorter distance along the dynamic submarine power cable inside the bend stiffener before reaching the hottest point. The hottest point is as a result more efficiently cooled.

The fluid flow device may be arranged to provide the fluid flow along the entire length of the longitudinal channel and thus along the entire length of the bend stiffener.

According to one embodiment the fluid flow device is configured to generate the fluid flow with a speed in a range of 0.5-10 m/s.

According to one embodiment the fluid flow device is configured to generate the fluid flow with a speed in a range of 0.5-5 m/s.

According to one embodiment the fluid flow device is configured to generate the fluid flow with a speed in a range of 0.5-3 m/s.

According to one embodiment the fluid flow device is configured to generate the fluid flow with a speed in a range of 0.5-2 m/s.

According to one embodiment the fluid flow device comprises a first fan.

The first fan may be a first axial or a first radial fan. Alternatively, the first fan may be an axial fan.

The offshore system may comprise a tube to which the bend stiffener is mounted and with which the longitudinal channel is in fluid communication. The tube may comprise a first radial opening and the first fan may be configured to move air into the tube via the first radial opening such that the air flow enters the longitudinal channel of the bend stiffener from above. Alternatively, the first fan may be arranged to blow air into the longitudinal channel axially from an axial top opening above the bend stiffener.

According to one embodiment the fluid flow device comprises a second fan.

The second fan may be a second axial or a second radial fan. Alternatively, the second fan may be an axial fan.

The offshore system may comprise a tube to which the bend stiffener is mounted and with which the longitudinal channel is in fluid communication. The tube may comprise a second radial opening and the second fan may be configured to move air into the tube via the second radial opening such that the air flow enters the longitudinal channel of the bend stiffener from above. Alternatively, the second fan may be arranged to blow air into the longitudinal channel axially from an axial top opening above the bend stiffener.

According to one embodiment the fluid flow is an air flow.

According to one embodiment the bend stiffener is an air-installed bend stiffener.

According to one embodiment the dynamic submarine power cable is a high voltage power cable rated for a voltage of at least 66 kV.

One embodiment comprises an offshore floating structure, wherein the bend stiffener forms is connected to the offshore floating structure.

According to one embodiment the offshore floating structure is one of a floating wind turbine, a floating substation, a floating hydrocarbon platform or a floating hydrocarbon vessel.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1. schematically shows an offshore system; and
Fig. 2 schematically shows a close-up cross-sectional view of a portion of the offshore system in Fig. 1.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

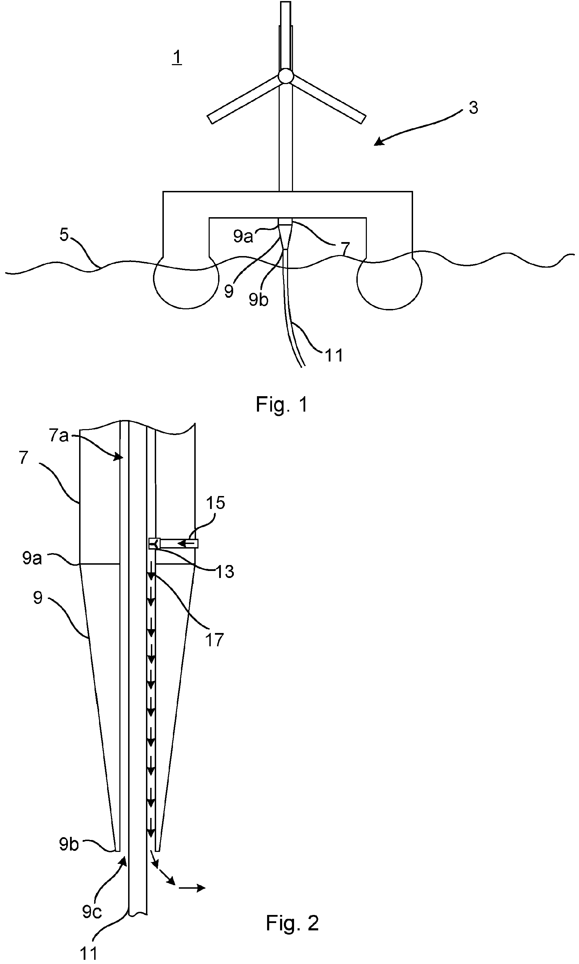

Fig. 1 shows an example of an offshore system 1. The offshore system 1 comprises an offshore floating structure 3.

The offshore system 1 is deployed in water 5 such as sea water. In particular, the offshore floating structure 3 is deployed in water 5 and floats on the water surface.

In the present example, the offshore floating structure 3 is a floating wind turbine but could alternatively for example be a floating substation, a floating hydrocarbon platform, a floating hydrocarbon vessel, a semi-submersible platform, or any other offshore floating structure which generates electric power, relays electric power, or consumes electrical power.

The offshore floating structure 3 may comprise an offshore structure tube 7. The offshore structure tube 7 may be made of metal, such as steel. The offshore structure tube 7 extends vertically or essentially vertically downwards in a direction towards the seabed.

The offshore structure tube 7 may be an I-tube.

The offshore system 1 comprises a bend stiffener 9. The bend stiffener 9 has a top end 9a and a lower end 9b. The bend stiffener 9 tapers in a direction from the top end 9a towards the lower end 9b.

The bend stiffener 9 has a central channel extending from the top end 9a to the lower end 9b. The central channel extends along a longitudinal axis of the bend stiffener 9.

The bend stiffener 9 is connected to the offshore structure tube 7. The top end 9a of the bend stiffener 9 is connected to a lower portion of the offshore structure tube 7. The offshore structure tube 7 is arranged vertically above the bend stiffener 9.

Alternatively, the bend stiffener 9 may be connected to a balcony (not shown) of the offshore floating structure 3.

The bend stiffener 9 is in the present example an air-installed bend stiffener. The bend stiffener 9 is thus not submerged in the water 5.

The offshore system 1 comprises a dynamic submarine power cable 11.

The dynamic submarine power cable 11 may be a single phase or multi-phase AC power cable or a single pole or multi-pole DC power cable.

The dynamic submarine power cable 11 may be a high voltage AC or DC power cable.

The dynamic submarine power cable 11 comprises a conductor and an insulation system arranged around the conductor. The insulation system comprises an inner semiconducting layer, an insulation layer arranged outside the inner semiconducting layer, and an outer semiconducting layer arranged outside the insulation layer.

The dynamic submarine power cable 11 comprises a metallic water barrier arranged concentrically with the conductor, outside the insulation system. The metallic water barrier may be corrugated or smooth. The metallic water barrier may comprise lead or be lead-free. If lead-free, the metallic water barrier may for example comprising copper, aluminium, or stainless steel. Alternatively, the dynamic submarine cable could have a wet or semi-wet design, i.e., be without any metallic water barrier.

The dynamic submarine power cable 11 comprises a polymer sheath arranged outside the metallic water barrier.

The dynamic submarine power cable 11 may comprise one or more armour layers arranged around the polymer sheath. The armour layer(s) may comprise metal wires or ropes, for example made of galvanized steel or austenitic stainless steel, synthetic wires such as jacketed aramid fibres, or a combination of both.

The dynamic submarine power cable 11 may have an outer serving arranged outside the one or more armour layers.

In cases where the dynamic submarine power cable 11 comprises more than one electric phase or pole, the dynamic submarine power cable 11 comprises more than one conductor, each with the corresponding structure as described above arranged around it, i.e., insulation system, metallic water barrier, and polymer sheath. Each such structure forms a power core. The armour layer(s) is arranged around all of the power cores.

The dynamic submarine power cable 11 extends through the entire bend stiffener 9 in the central channel of the bend stiffener 9.

The dynamic submarine power cable 11 extends from the offshore floating structure 3 to the seabed.

The dynamic submarine power cable 11 extends through the offshore structure tube 7 and is anchored to the offshore floating structure 3. The dynamic submarine power cable 11 may be anchored to the offshore floating structure 3 by means of a hang-off device.

The dynamic submarine power cable 11 is terminated on the offshore floating structure 3.

The dynamic submarine power cable 11 is cooled by forced fluid flow inside the bend stiffener 9, as will be explained in more detail in the following.

Fig. 2 shows a close-up view of the offshore system 1 in a region of the bend stiffener 9.

The central channel 9c of the bend stiffener has an inner surface which is arranged radially spaced apart from the outer surface of the dynamic submarine power cable 11 along the entire length of the dynamic submarine power cable 11 extending through the bend stiffener 9. There is thus a radial spacing between the dynamic submarine power cable 11 and the central channel 9c.

The radial spacing forms a longitudinal channel between the bend stiffener 9 and the dynamic submarine power cable 11. The longitudinal channel extends from the top end 9a to the lower end 9b of the bend stiffener 9 along the entire length of the dynamic submarine power cable 11 arranged in the bend stiffener 9.

The offshore structure tube 7 has an inner tube channel 7a which is in fluid communication with the longitudinal channel of the bend stiffener 9. The longitudinal channel opens into the inner tube channel 7a in a vertically upwards direction.

The offshore system 1 comprises a fluid flow device 13. The fluid flow device 13 is configured to generate a fluid flow inside the longitudinal channel.

The fluid flow device 13 is configured to generate a fluid flow with a speed in a range of 0.5-10 m/s, for example in a range of 0.5-5 m/s, such as 0.5-3 m/s or 0.5-2 m/s.

The speed, or flow rate, may be determined based on the magnitude of the current passing through the dynamic submarine power cable 11 and/or on the ambient air temperature.

The fluid flow device 13 is according to the example configured to generate the fluid flow in a direction from the top end 9a towards the lower end 9b. The fluid flow device 13 is configured to generate the fluid flow along the entire longitudinal channel.

According to one example, the fluid flow device 13 is arranged in the offshore structure tube 7.

The offshore system 1 may according to one variation comprise a fluid intake 15 configured to draw ambient air outside the offshore structure tube 7 into the fluid flow device 13 for discharging into the longitudinal channel. The fluid intake 15 may comprise a through-opening that extends through a wall of the offshore structure tube 7 to the fluid flow device 13.

The fluid flow device 13 may comprise one or more fans, for example a first fan and a second fan. More than one fan provides redundancy in case a fan would fail.

The dynamic submarine power cable 11 may comprise an optical fibre cable configured to measure the temperature of the conductor of the dynamic submarine power cable 11 in the bend stiffener 9. The offshore system 1 may comprise a control system configured to control the fluid flow device 13 based on the conductor temperature measured along the section of the dynamic submarine power cable 11 that extends in the bend stiffener 9. The control system may for example be configured to control the fluid flow device 13 based on the highest conductor temperature measured along the section of the dynamic submarine power cable 11 that extends in the bend stiffener 9.

According to one example, the offshore system 1 may comprise an air cooler configured to cool air and supply the cooled air to the fluid flow device 13.

As shown in Fig. 2, in use, the fluid flow device 13 generates a fluid flow 17 in the bend stiffener 9. The fluid flow 17 is an airflow. The fluid flow 17 is in a direction from the top end 9a towards the lower end 9b of the bend stiffener 9. The fluid flow 17 leaves the bend stiffener at the lower end 9b of the bend stiffener 9.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. An offshore system (1) comprising:
a dynamic submarine power cable (11),
a bend stiffener (9) having a lower end (9b) and a top end (9a), the bend stiffener (9) having a central channel extending from the lower end (9b) to the top end (9a), the central channel receiving the dynamic submarine power cable (11) with a radial spacing between an inner surface of the central channel and an outer surface of the dynamic submarine power cable (11) along the length of the dynamic submarine power cable (11) arranged in the bend stiffener (9), the radial spacing forming a longitudinal channel between the bend stiffener (9) and the dynamic submarine power cable (11), and
a fluid flow device (13) configured to generate a fluid flow inside the longitudinal channel.

2. The offshore system (1) as claimed in claim 1, wherein the fluid flow device (13) is configured to generate the fluid flow in a direction from the top end (9a) towards the lower end (9b).

3. The offshore system (1) as claimed in claim 1 or 2, wherein the fluid flow device (13) is configured to generate the fluid flow with a speed in a range of 0.5-10 m/s.

4. The offshore system (1) as claimed in any of the preceding claims, wherein the fluid flow device (13) is configured to generate the fluid flow with a speed in a range of 0.5-5 m/s.

5. The offshore system (1) as claimed in any of the preceding claims, wherein the fluid flow device (13) is configured to generate the fluid flow with a speed in a range of 0.5-3 m/s.

6. The offshore system (1) as claimed in any of the preceding claims, wherein the fluid flow device (13) is configured to generate the fluid flow with a speed in a range of 0.5-2 m/s.

7. The offshore system (1) as claimed in any of the preceding claims, wherein the fluid flow device (13) comprises a first fan.

8. The offshore system (1) as claimed in claim 7, wherein the fluid flow device (13) comprises a second fan.

9. The offshore system (1) as claimed in any of the preceding claims, wherein the fluid flow is an air flow.

10. The offshore system (1) as claimed in any of the preceding claims, wherein the bend stiffener (9) is an air-installed bend stiffener.

11. The offshore system (1) as claimed in any of the preceding claims, wherein the dynamic submarine power cable (11) is a high voltage power cable rated for a voltage of at least 66 kV.

12. The offshore system (1) as claimed in any of the preceding claims, comprising an offshore floating structure (3), wherein the bend stiffener (9) is connected to the offshore floating structure (3).

13. The offshore system (1) as claimed in claim 12, wherein the offshore floating structure (3) is one of a floating wind turbine, a floating substation, a floating hydrocarbon platform or a floating hydrocarbon vessel.
